(19) 

**Europäisches Patentamt**
**European Patent Office**
**Office européen des brevets**

(11) **EP 4 617 762 A1**

(12) **EUROPEAN PATENT APPLICATION**

(43) Date of publication:
**17.09.2025 Bulletin 2025/38**

(21) Application number: **24162901.3**

(22) Date of filing: **12.03.2024**

(51) International Patent Classification (IPC):
***G02B 26/10*** *(2006.01)*

(52) Cooperative Patent Classification (CPC):
**G02B 26/101**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Murata Manufacturing Co., Ltd.**
**Nagaokakyo-shi, Kyoto 617-8555 (JP)**

(72) Inventor: **ONTRONEN, Antti**
**01690 Vantaa (FI)**

(74) Representative: **Boco IP Oy Ab**
**Kansakoulukatu 3**
**00100 Helsinki (FI)**

(54) **ARRANGEMENT FOR A MEMS MIRROR**

(57) The disclosure describes an arrangement for highly versatile sweep motion control of MEMS mirrors. The disclosed solution allows controlling the 2-axis movement of MEMS mirrors via superimposed first set and second set of electrical signals having tunable frequencies. Mirror motion may be used to compensate for the non-ideal time-spread of measurement points.

EP 4 617 762 A1

## Description

FIELD OF THE DISCLOSURE

This disclosure relates to microelectromechanical devices and more particularly to devices which can be configured to direct a light beam. The present disclosure further concerns motion control of MEMS mirrors.

BACKGROUND OF THE DISCLOSURE

Microelectromechanical systems (MEMS) are the technology of microscopic devices which combine mechanical and electrical features. MEMS devices have various applications in electronics, optics, and sensors. MEMS mirrors are small-scale mirrors that are often part of MEMS devices. They are typically used for redirecting or modulating light. MEMS mirrors are valued for their small size, rapid response, and low power consumption. These features make them suitable for a wide range of applications where precise control of light direction is essential.

MEMS mirrors can, for example, be used in LIDAR (Light Detection and Ranging) systems which are a remote sensing technology that uses laser light to measure distances with high precision. LIDAR systems are used to create detailed and accurate maps of the surrounding environment or the shape of objects. They emit laser pulses and measure the time it takes for the light to return after hitting a target, allowing for the calculation of distances and the creation of detailed point clouds. A MEMS mirror in LIDAR systems serves as a crucial component for directing laser beams in different directions, enabling the LIDAR system to scan and map its surrounding environment with high precision.

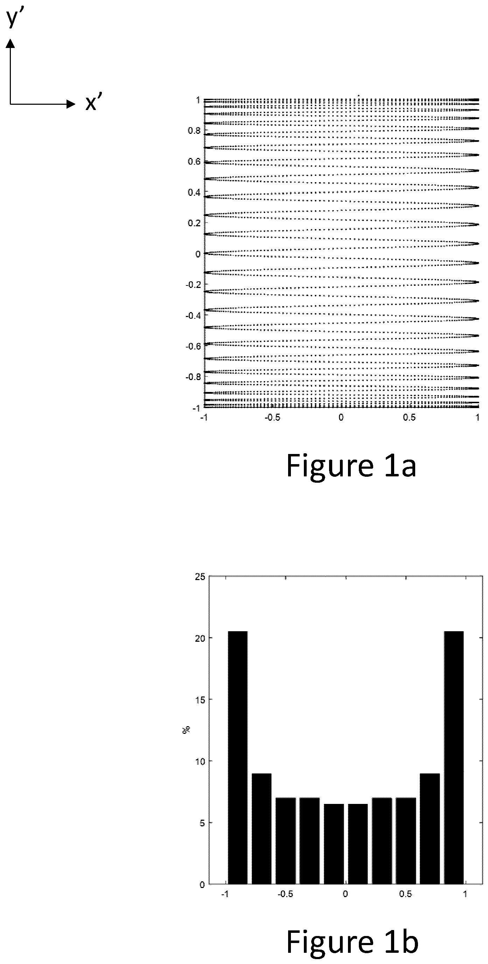

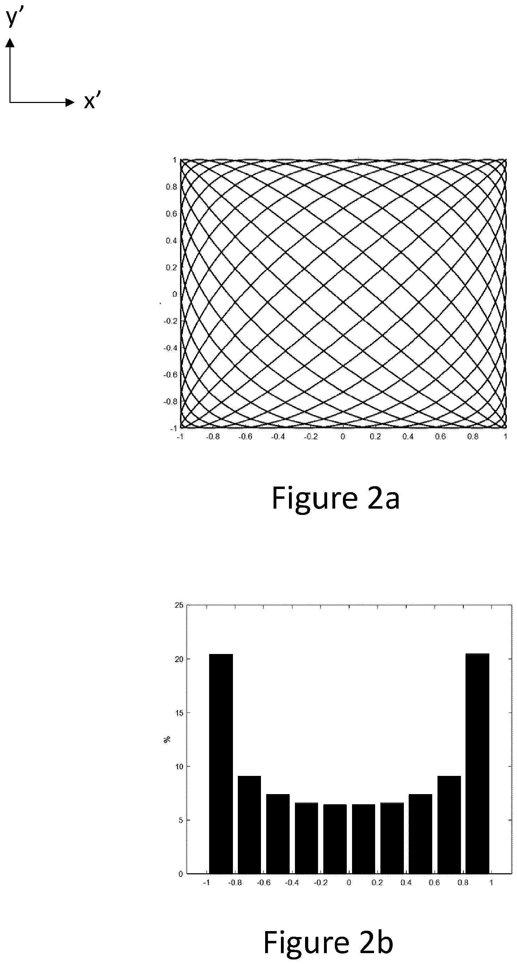

As the MEMS mirror moves, oscillates, or rotates around for example the x and a y-rotation axes, it steers the laser beams in a controlled and precise manner. The path of the reflected laser beam which hits a surface is a projection from the mirror surface of the laser beam that can be plotted on a x'y'-plane. The most commonly used laser scanning modes are the Raster and the Lissajous modes. In Raster scanning mode with a MEMS mirror, the mirror moves back and forth along rows and columns with highly differing rates, covering the entire scanned area in a systematic and sequential manner, typically without overlapping its own path. Figure 1a shows the beam's movement speed during a Raster scanning. The movement speed is highest in the center of the pattern and lowest near the edges. In other words, when using a constant sampling rate, a larger number of points is scanned near the edges compared to the center of the scanned area. Figure 1b shows the distribution of the scanned points along the x'-axis in the Raster scanning mode. About 60% of the scanned points are adjacent to the sides of the scanned area, the rest of the scanned points being distributed in the center. Such distribution results in pixels inaccuracy in the center area of a scanned image. Figure 2a shows an example of the beam movement speed during a Lissajous scanning. The Lissajous pattern is generated by oscillating the MEMS mirror along two perpendicular axes. The beam's movement speed is highest in the center of the pattern and lowest near the edges of the pattern, more particularly, near the corners of the pattern. Figure 2b shows the distribution of the scanned points along the x'-axis using in the Lissajous scanning mode. As in the Raster scanning mode, less points are scanned in the center than near the edges of the scanned area. This results in pixels inaccuracy in the center of the scanned image and therefore a distortion of the center of the image.

BRIEF DESCRIPTION OF THE DISCLOSURE

An object of the present disclosure is to provide a solution to the problem described above.

The disclosed solution allows highly versatile sweep motion control of MEMS mirrors. Examples provided in this disclosure describe ways to implement the solution. The improvement is achieved by features of an arrangement comprising a mirror and the configuration of control signals which drive the mirror.

The object of the disclosure is achieved by an arrangement which is characterized by what is stated in the independent claim. The preferred embodiments of the disclosure are disclosed in the dependent claims.

The disclosure is based on the idea of controlling the 2-axis movement of MEMS mirrors via superimposed first set and second set of electrical signals having tunable frequencies. Mirror motion may be used to compensate for the non-ideal time-spread of measurement points. This provides new improvements of scanning mode leading to higher pixel accuracy in the central area of a scanned image.

BRIEF DESCRIPTION OF THE DRAWINGS

In the following, the disclosure will be described in greater detail by means of preferred embodiments with reference to the accompanying drawings, in which

Figure 1a illustrates the beam's movement speed during a Raster scanning;

Figure 1b illustrates the distribution of the scanned points along the x-axis in the Raster scanning mode;

Figure 2a illustrates the beam's movement speed during a Lissajous scanning;

Figure 2b illustrates the distribution of the scanned points along the x-axis in the Lissajous scanning mode;

Figure 3a illustrates a simplified representation of an arrangement comprising a flat mirror and a source of signals according to the present disclosure. The mirror is in its rest position;

Figure 3b illustrates a simplified representation of a side view of the flat mirror rotating about the x-axis;

Figure 3c illustrates a simplified representation of a side view of the flat mirror rotating about the y-axis;

Figure 3d illustrates a simplified representation of a side view of a convex mirror rotating about the y-axis;

Figure 3e illustrates a simplified representation of a side view of a concave mirror rotating about the y-axis;

Figure 4a illustrates a simplified representation of an arrangement comprising a curved mirror and a source of signals. The mirror is in its rest position;

Figure 4b illustrates an example of the position of the curved mirror while it is making a clockwise planar movement in the xy-plane;

Figure 4c illustrates an example of the position of the curved mirror while it is making a counter-clockwise planar movement in the xy-plane;

Figures 4d - 4e illustrate how the direction of a reflected beam changes when the position of a curved mirror is shifted in the xy-plane;

Figure 5 illustrates a simplified representation of a system comprising the arrangement in accordance with one embodiment of the invention;

Figure 6a illustrates a simplified representation of a reflected light beam generated by the mirror when the first set of electrical signals is applied to the first set and second set of actuators. In this example, the first axis is parallel to the z-axis;

Figure 6b illustrates a simplified representation of the reflected light beam when the second set of electrical signals is applied to the first set and second set of actuators. The first axis is parallel to the z-axis;

Figure 6c illustrates a simplified representation of another reflected light beam generated by the mirror when the first set of electrical signals is applied to the first set and second set of actuators. In this example, the first axis has a non-zero angle with the z-axis;

Figure 6d illustrates a simplified representation of the reflected light beam when the second set of electrical signals is applied to the first set and second set of actuators. The first axis has a non-zero angle with the z-axis;

Figure 7a illustrates a side view of an incident light beam and the reflected light beam by a curved mirror in its rest position;

Figure 7b illustrates an example of a reflected light beam by the curved mirror when the mirror moves from its rest position;

Figure 7c illustrates another example of a reflected light beam by the curved mirror when the mirror moves from its rest position;

Figures 8a-c illustrate different positions of a mirror when the first set of electrical signals and the second set of electrical signals are applied separately to the actuators, and the position of the mirror when the first set of electrical signals and the second set of electrical signals are applied simultaneously to the actuators;

Figures 9a-e illustrate depictions of consecutively recorded scanned areas in accordance with one embodiment of the invention;

Figure 10 shows the distribution of the scanned points along the x'-axis in the scanning mode depicted in figure 9e;

Figures 11a-e illustrate depictions of consecutively recorded scanned areas in accordance with another embodiment of the invention;

Figure 12 shows the distribution of the scanned points along the x'-axis in the scanning mode depicted in figure 11e;

Figures 13a-e illustrate depictions of consecutively recorded scanned areas in accordance with a further embodiment of the invention;

Figure 14 shows the distribution of the scanned points along the x'-axis in the scanning mode depicted in figure 13e;

DETAILED DESCRIPTION OF THE DISCLOSURE

The disclosure describes an arrangement comprising a fixed structure. The fixed structure defines a horizontal xy-plane, and there is a vertical z-direction which is perpendicular to the xy-plane. The arrangement further comprises a mirror. The mirror is attached to the fixed structure via a suspension structure and the mirror has a zero-position. The mirror is configured to reflect an incoming light beam.

The arrangement further comprises a first set of actuators connected to the mirror and a second set of actuators connected to the mirror. The first set of actuators and the second set of actuators are configured to move the mirror in relation to the xy-plane.

The arrangement further comprises one or more sources of electrical signals. The one or more sources of electrical signals are configured to apply a first set of electrical signals to the first set and second set of actuators, and the one or more sources of electrical signals are also configured to apply a second set of electrical signals to the first set and second set of actuators.

A reflected light beam points in the direction of a first axis when the mirror is in its zero-position. The first set of electrical signals is configured to move the mirror so that the reflected beam obtains a nonzero angle with the first axis and rotates about the first axis in a first direction when the first set of electrical signals is applied to the first set and second set of actuators. The second set of electrical signals is configured to move the mirror so that the reflected beam obtains a nonzero angle with the first axis and rotates about the first axis in a second direction when the second set of electrical signals is applied to the first set and second set of actuators. The second direction is opposite to the first direction.

The one or more sources of electrical signals are configured to apply the first set of electrical signals and the second set of electrical signals simultaneously to the first set and second set of actuators.

The fixed structure may be a frame that surrounds the mirror. The mirror and the fixed structure may be formed in a device wafer. The device wafer may be a silicon wafer. The device wafer may have two main surfaces, a top surface and a bottom surface. The fixed structure may be parallel the main surfaces of the device layer. Alternatively, the fixed structure may be tilted with respect to the main surfaces of the wafer.

The zero-position of the mirror refers to the position of the mirror from which the movement caused by the first set and the second set of electrical signals begins. The zero-position of the mirror may be the rest position of the mirror. In other words, the zero-position of the mirror may be the position of the static mirror before any electrical signals are applied to the actuators. Alternatively, the zero-position of the mirror may be the last position of the moving mirror caused by different electrical signals before the first set and second set of electrical signals initiate a new movement.

The zero-position reflects the incident light beam along the first axis. The light is reflected according to the law of reflection (ie., the angle of incidence is equal to the angle of reflection). In the case of a flat mirror, the angle of reflection (and therefore the angle of the first axis with respect to the z-axis) is determined by the angle of incidence of the incoming beam with respect to the xy-plane. In the case of a curved mirror, the angle of reflection is determined by the angle of incidence of the incoming beam with respect to the xy-plane, and by the curvature of the mirror at the point where the incoming beam strikes the mirror. The angle of reflection is calculated from a tangential plane to the mirror surface at the point where the incoming light beam strikes the surface.

The incident light beam may strike the mirror anywhere on its surface. The first set of electrical signals and the second set of electrical signals may be electrical voltage signals. These options may apply to any embodiment in this disclosure.

The expression "first direction" may be referred to as a "clockwise direction". The expression "second direction" may be referred to as a "counter-clockwise" direction. The first set of electrical signals and the second set of electrical signals are applied to the first set of actuators and the second set of actuators simultaneously. This creates controllable angular movements of the mirror and therefore higher control of its trajectory.

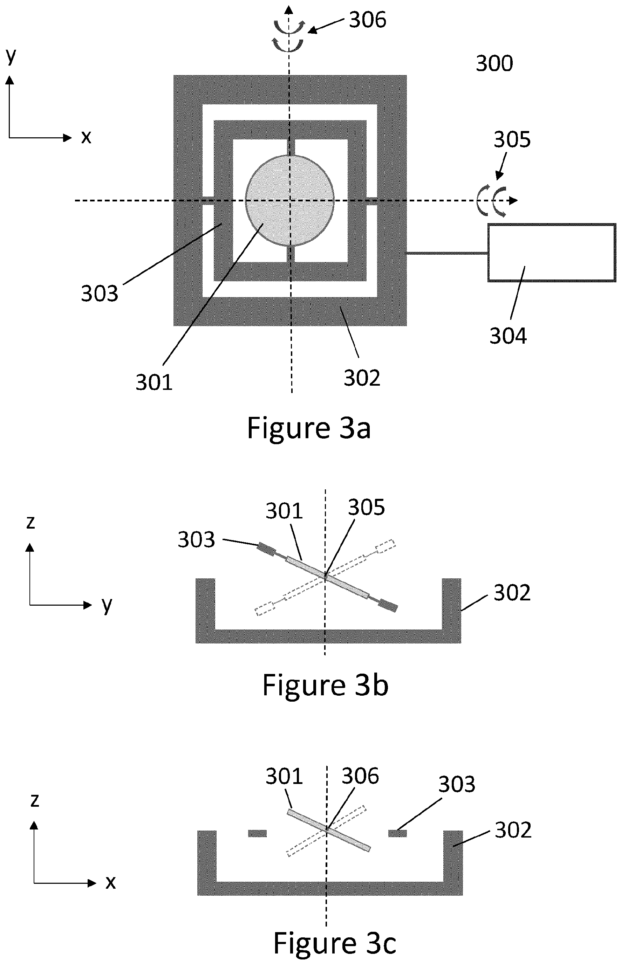

Figure 3a illustrates a simplified representation of an arrangement 300 according to the present disclosure. The arrangement 300 comprises a mirror 301 and a fixed structure 302. In this example, the mirror has a flat surface. The mirror 301 is attached to the fixed structure 302 via a suspension structure 303. The suspension structure 303 allows the mirror 301 to move in relation to the xy-plane. In this figure, the mirror 301 lies in its rest position which is parallel to the xy-plane. The arrangement 300 further comprises a first set of actuators and a second set of actuators (not shown on the figure). The arrangement 300 further comprises a source of electrical signals 304. The source of electrical signals 304 may for example be configured to send electrical signals to the first set of actuators so that the first set of actuators cause the mirror to rotate about the x-axis 305, and to the second set of actuators so that the second set of actuators cause the mirror to rotate about the y-axis 306.

The first set of actuators may comprise actuators which are on opposite sides of the mirror in the x-direction. The second set of actuators may comprise actuators that are on opposite sides of the mirror in the y-direction. The first set of actuators and the second set of actuators may be piezoelectric, electrostatic, thermal, or magnetic actuators. The first and second sets of actuators may for example comprise movable capacitive combs on the mirror or on the adjacent suspension structure paired with fixed capacitive combs on an adjacent fixed structure. Alternatively, the first and second sets of actuators may comprise a piezoelectric material sandwiched between two electrodes on a suspension structure. These options may apply to any embodiment in this disclosure.

The mirror may be a resonant MEMS mirror. The mirror may be made of silicon. It may be coated with a reflecting material. The reflective coating may be made of metal such as Au, Ag, or Al or it may be made of a dielectric material such as $SiO_2$, $TiO_2$ or $MgF_2$. The arrangement may further comprise a light source. These options may apply to any embodiment in this disclosure.

Figure 3b illustrates a simplified representation of a side view of the mirror rotating about the x-axis. The mirror 301 and the suspension structure 303 may move back and forth in an oscillating circular trajectory about a rotation axis 305 which is parallel to the x-axis.

Figure 3c illustrates a simplified representation of a side view of the mirror rotating about the y-axis. The mirror 301 may move back and forth in an oscillating circular trajectory about a rotation axis 306 which is parallel to the y-axis.

In an implementation form, the first set of actuators may be configured to move the mirror by rotational oscillation about the x-axis, and the second set of actuators may be configured to move the mirror by rotational oscillation about the y-axis. The expression "rotational oscillation" refers to the repetitive back-and-forth rotation movement of the mirror around either the x- or y-axis. The mirror may be flat. Alternatively, the mirror may have a curved surface.

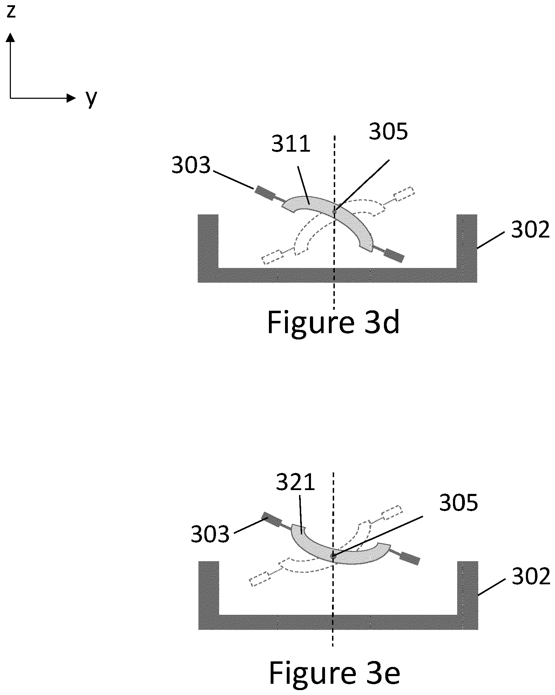

In other words, the mirror may be convex or concave. Figure 3d illustrates a simplified representation of a side view of a convex mirror 311 rotating about the y-axis. Figure 3e illustrates a simplified representation of a side view of a concave mirror 321 rotating about the y-axis.

In another implementation form, the mirror may have a curved surface, and the first set of actuators may be configured to move the mirror by linear oscillation along the x-axis, and the second set of actuators may be configured to move the mirror by linear oscillation along the y-axis. The expression "linear oscillation" refers to the repetitive back-and-forth linear movement of the mirror along either the x- or y-axis. In other words, the movement in the first direction and the movement in the second direction may be planar movements in the xy-plane. The curved surface may be a convex surface or a concave surface.

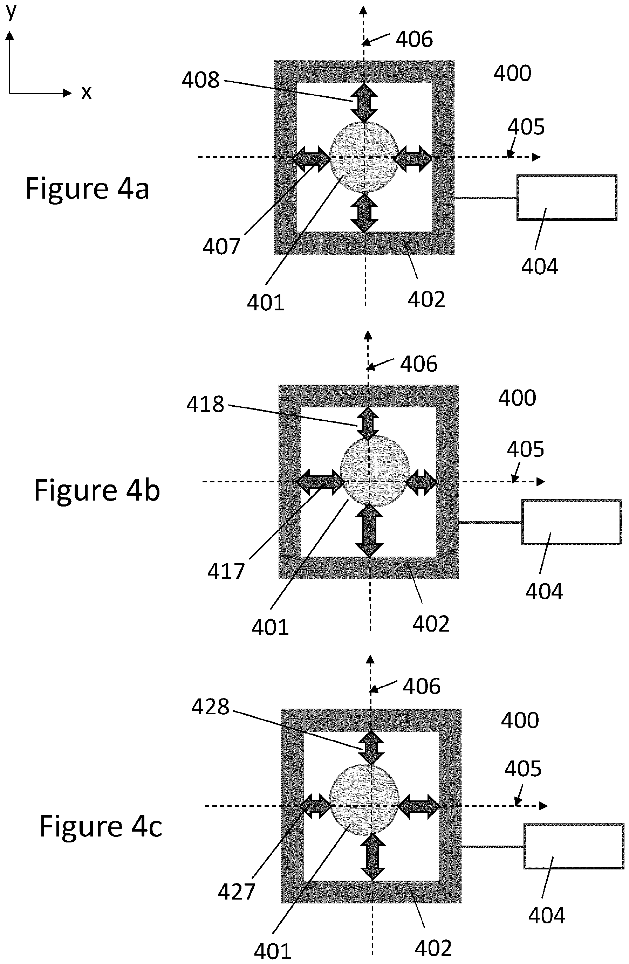

Figure 4a illustrates a simplified representation of an arrangement 400 comprising a curved mirror 401 and a source of signals 404. The figure shows a the top view of the mirror. The arrangement further comprises a first set of actuators 407 which may be configured to move the mirror 401 by linear oscillation along the x-axis 405 and a second set of actuators 408 which may be configured to move the mirror 401 by linear oscillation along the y-axis 406.

In this example, the first set of actuators 407 comprises two actuators which are on opposite sides of the mirror 401 in the x-direction, and the second set of actuators comprises two actuators which are on opposite sides of the mirror 401 in the y-direction. The mirror is in its rest position. In other words, no electrical signals are applied to the first set and second of actuators. Reference number 402 in figure 4a corresponds to reference number 302 in figure 3a.

Figure 4b illustrates an example of the position of the mirror shown in figure 4a when the source of electrical signals 404 sends a first set of electrical signals to the first set of actuators 417 and the second set of actuators 418. In this example, the first set of actuators 417 causes the mirror to move along the x-axis 405, and the second set of actuators 418 causes the mirror to move along the y-axis 406 so that the resulting combined movement is a clockwise planar movement in the xy-plane.

Figure 4c illustrates an example of the position of the mirror shown in figure 4a when the source of electrical signals 404 sends a second set of electrical signals to the first set of actuators 427 and the second set of actuators 428. The first set of actuators 427 causes the mirror to move along the x-axis 405, and the second set of actuators 428 causes the mirror to move along the y-axis 406 so that the resulting combined movement is a counter-clockwise planar movement in the xy-plane.

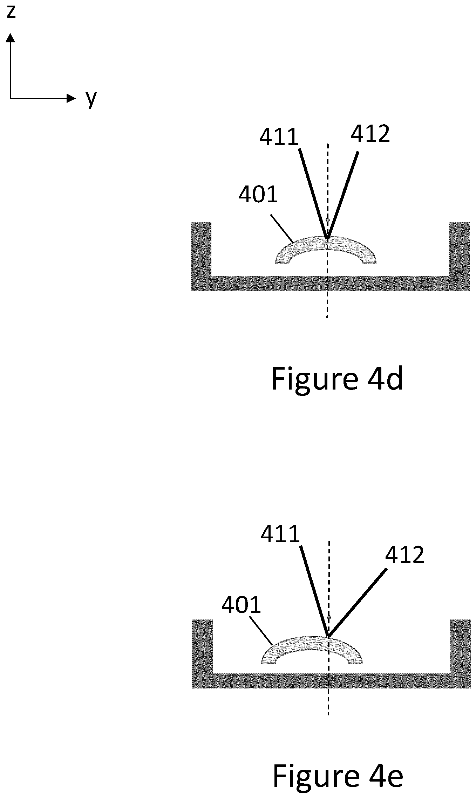

Figures 4d - 4e illustrate in two dimensions how the direction of a reflected beam 412 changes when the position of a curved mirror 401 is shifted in the xy-plane. In figure 4d, an incoming beam 411 strikes the mirror 401 at the point marked by the dotted line. The reflection angle is determined by the normal (not illustrated) to the mirror surface at the point where the incoming beam 411 strikes the mirror 401. In this illustration this normal is approximately parallel with the dotted line, but other options are also possible since the incoming beam 411 does not necessarily have to be aimed at the highest point on the mirror 401.

In figure 4e, the mirror 401 has been shifted to the left along the y-axis. The incoming beam 411 has not moved, but the shifting of the mirror has changed the direction of the normal (not illustrated) to the mirror surface at the point where the incoming beam 411 strikes the mirror 401. The reflection angle, and the direction of the reflected beam 412, has therefore also changed. The linear in-plane mirror movement along two axes illustrated in figures 4a - 4c can therefore generate the same kind of movement in the reflected beam as the rotational out-of-plane movement illustrated in figures 3b - 3c. This will be explained in more detail below. Any mirror 401 which is described as undergoing linear movement in this disclosure may, but does not necessarily have to, be suspended from a surrounding fixed structure with the same kind of suspension structure as the mirror 301 in figure 3a.

In an implementation form, the mirror surface may define a mirror plane. The mirror surface may be parallel to the xy-plane when the mirror lies in its rest position. The mirror may have a central axis wherein the central axis is perpendicular to the xy-plane. The first set of actuators may be configured to make the mirror rotate about the x-axis, and a second set of actuators may be configured to make the mirror rotate about the y-axis. The first set of electrical signals may be configured to tilt the mirror so that there is a nonzero angle between the central axis and the normal to the mirror plane, and to rotate the mirror so that the normal rotates about the central axis in a first direction. The second set of electrical signals may be configured to tilt the mirror so that there is a nonzero angle between the central axis and the normal to the mirror plane, and to rotate the mirror so that the normal rotates about the central axis in a second direction, wherein the second direction is opposite to the first direction. The first set of electrical signals and the second set of electrical signals are applied to the first set of actuators and the second set of actuators simultaneously.

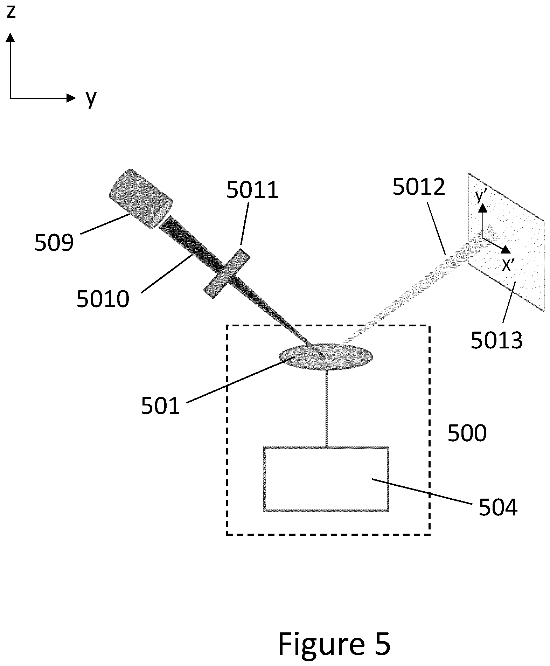

In a possible implementation, the arrangement may be used in a system for mapping an object or an area. Figure 5 illustrates a simplified representation of a system comprising an arrangement 500 according to this invention. For example, a light source 509, such as a laser source, may emit an incoming light beam 5010 toward the mirror 501. The angle of incidence of the incoming light beam with respect to the xy-plane may be freely selected depending on the application. The light beam may be collimated by a collimator 5011 before reaching the mirror 501. The movement of the mirror 501 in relation to the x-axis and y-axis directs the incident light 5010 toward the object or the area to be scanned. The reflected beam 5012 scans the object 5013 according to a scanning pattern determined by the movements of the mirror 501. The source of electrical signals 504 may be configured to send simultaneously a first set of electrical signals to the first set and second set of actuators and a second set of electrical signals to the first set and second set of actuators.

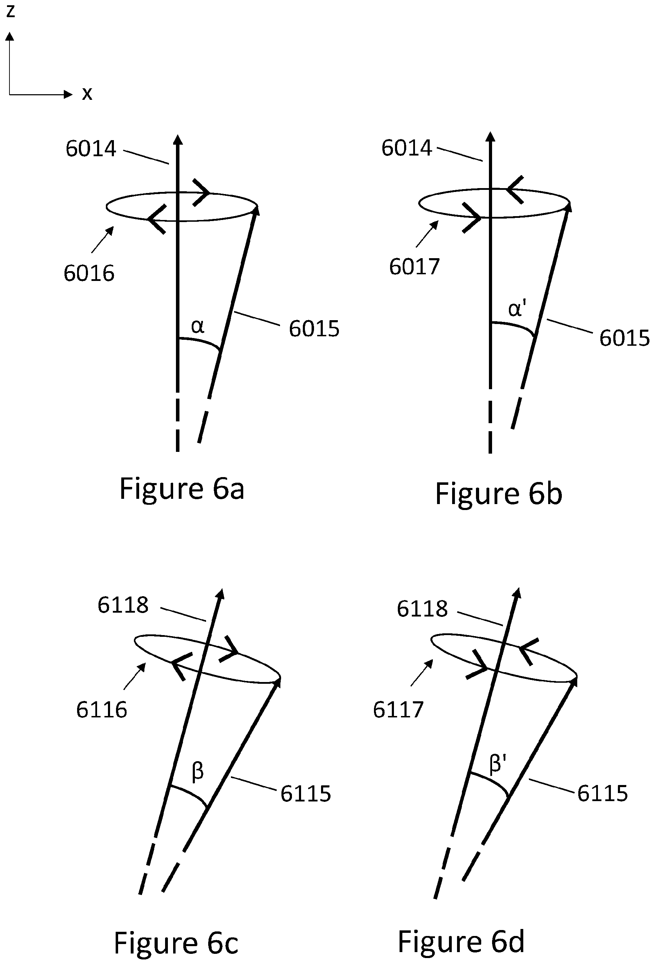

Figure 6a illustrates a simplified representation of a reflected light beam generated by the mirror when the first set of electrical signals is applied to the first set and second set of actuators. In this example, the first axis 6014 is parallel to the z-axis. The reflected beam 6015 which rotates clockwise 6016 about the first axis 6014 has a nonzero angle $\alpha$ with the first axis 6014.

Figure 6b illustrates a simplified representation of the reflected light beam when the second set of electrical signals is applied to the first set and second set of actuators. The reflected beam 6015 which rotates counter-clockwise 6017 about the first axis 6014 has a nonzero angle $\alpha$' with the first axis 6014. $\alpha$ may be equal to $\alpha$'. Alternatively, $\alpha$ may be different from $\alpha$'.

Figure 6c illustrates a simplified representation of another reflected light beam generated by the mirror when the first set of electrical signals is applied to the first set and second set of actuators. In this example, the first axis 6118 forms a nonzero angle with the z-axis. The reflected beam 6115 which rotates clockwise 6116 about the first axis 6118 has a nonzero angle $\beta$ with the first axis 6118.

Figure 6d illustrates a simplified representation of the reflected light beam when the second set of electrical signals is applied to the first set and second set of actuators. The reflected beam 6115 which rotates counter-clockwise 6117 about the first axis 6118 has a nonzero angle $\beta$' with the first axis 6118. $\beta$ may be equal to $\beta$'. Alternatively, $\beta$ may be different from $\beta$'.

In other words, on one hand the reflected beam 6015 (or 6115) scans the x'-y' surface (shown in figure 5) in a clockwise direction around a center determined by the first axis 6014 (or 6118) if only the first set of electrical signals is applied to the first set and second set of actuators. On the other hand, the reflected beam 6015 (or 6115) scans the x'-y' surface (shown in figure 5) in a counter-clockwise direction around a center determined by the first axis 6014 (or 6118) if only the second set electrical signals is applied to the first set and second set of actuators. When the both the first set and second set of electrical signals are applied simultaneously, the scanning motion becomes a combination of these two movements, as described in more detail below:

- The movements illustrated in figures 6a-6d can be generated by actuating rotating motion in either a flat mirror or a curved mirror. Rotating the mirror away from its zero position in any direction shifts the angle of reflection. Simultaneous rotational motion about the x- and y-axes generates the movements illustrated in figures 6a-6d.

- The movements illustrated in figures 6a-6d can alternatively be generated by actuating linear motion in a curved mirror. Shifting the curved mirror away from its zero position in any direction shifts the angle of reflection because it changes the point where the incoming light beam strikes the curved surface, which means that the tangential plane to this point also changes. Simultaneous linear movement in the x- and y-directions generates the movements illustrated in figures 6a-6d.

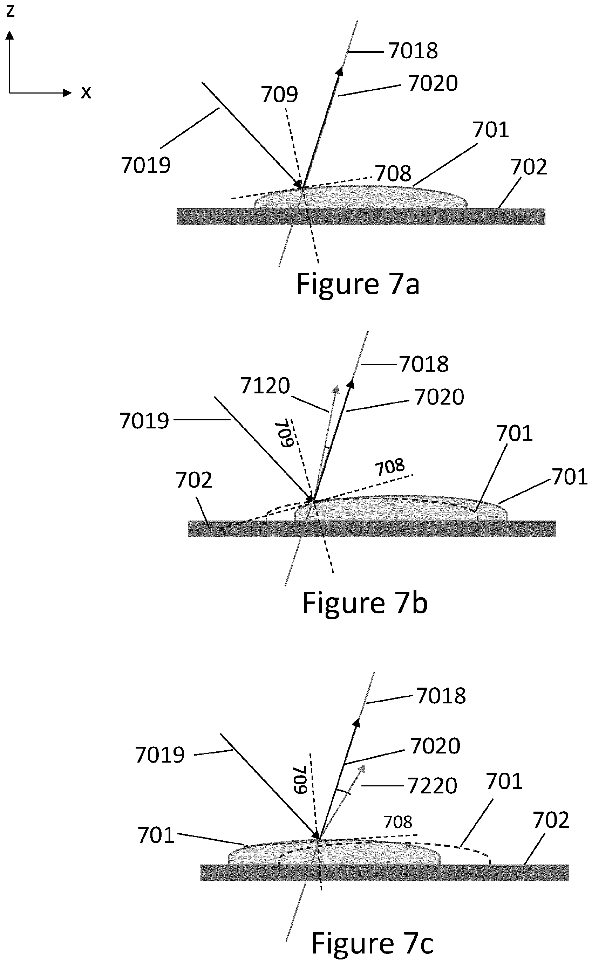

Figure 7a illustrates a side view of an incident light beam 7019 and the reflected light beam 7020 by a curved mirror 701. The mirror 701 is in its rest position. The figures also illustrates the tangent 708 and the normal 709 to the mirror surface at the point where the incident light beam 7019 strikes the mirror. The reflected beam 7020 points to the first axis 7018. The angle at which the incident light beam approaches the surface (angle of incidence) in relation to the normal 709 is equal to the angle at which it bounces off the surface (angle of reflection) in relation to the normal 709.

When the first set of electrical signals or the second set of electrical signals is applied to first set and second set of actuators, the actuators generate planar motion of the mirror in the xy-plane. The incident light beam 7019 does not shift, but the movement of the mirror changes the angle of the normal 709 in relation to the xy-plane. The angle of incidence and the angle of reflection therefore also change as the incident light beam strikes a different point on the mirror surface.

Figure 7b illustrates an example of a reflected light beam 7120 by the moving mirror 701. The dash line shows the mirror 701 in its rest position. The mirror has been shifted to the right. Due to the curvature of the mirror, the normal 709 therefore tilts a little bit further to the left. This shifts the reflected light beam 7120 away from the first axis 7018. Figure 7c illustrates another example of a reflected light beam 7220 by the moving mirror 701. The mirror has been shifted to the left, and the normal now tilts further to the right than in in figure 7a. Consequently, the reflected light beam 7020 is shifted away from the first axis 7018 in the opposite direction.

More generally, the mirror movement may be clockwise and/or anti-clockwise planar movement resulting from the combination of linear oscillation along the x-axis and linear oscillation along the y-axis. The reflected beam 7120 can then form a non-zero angle with the first axis 7018 and rotate in a clockwise and/or anti-clockwise direction about the first axis 7018. Reference number 702 in figures 7a-c corresponds to reference number 402 in figure 4a.

In any embodiment where the surface of the mirror is flat, the direction of the reflected light beam is also determined by the direction of the normal to the mirror surface. Linear movement will in this case not change the direction of the normal, but the rotational movement of the mirror, which has been described above, changes the direction of the normal and the angle between the reflected light beam and the first axis.

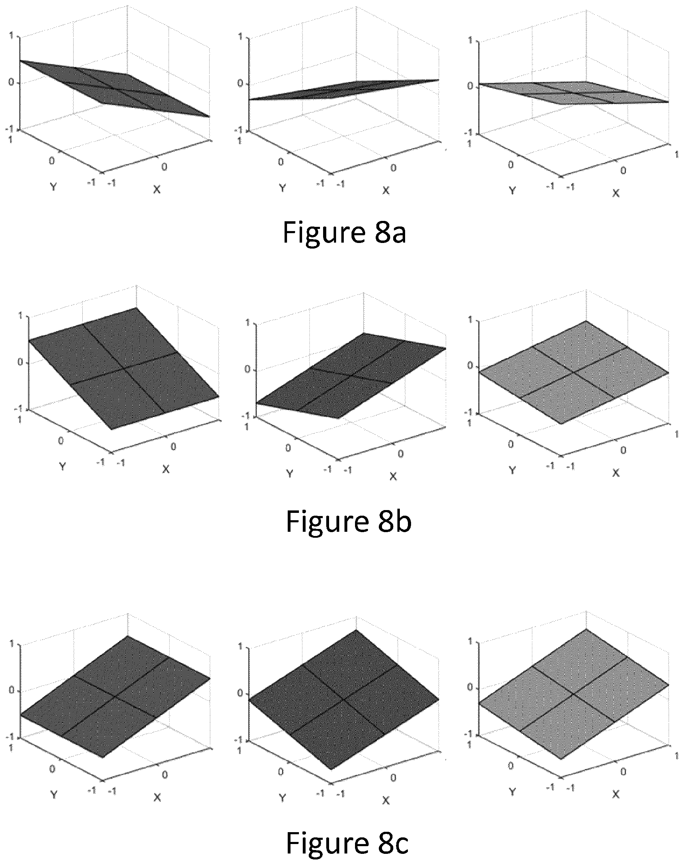

Figures 8a-c illustrate different positions of a mirror depending on the electrical signals applied to the actuators. In these examples, the mirror is flat, and the motion is rotating motion. The figures on the left show the position of the mirror at a specific point in time when only the first set of electrical signals is applied to the actuators. The figures in the middle show the position of the mirror at a specific point in time when only the second set of electrical signals is applied to the actuators. The figures on the right show the position of the mirror at a specific point in time when the first set of electrical signals and the second set of electrical signals are applied simultaneously to the first set of actuators and the second set of actuators. This operation mode allows highly versatile sweep motion control of the mirror.

The first set of electrical signals and the second set of electrical signals may be sinusoidal wave electrical signals. The signals in the first set of electrical signals may have an angular frequency ω1, and the signals in the second set of electrical signals may have an angular frequency ω2. The angular frequencies ω1 and ω2 may be tunable frequencies. This option may apply to any embodiment in this disclosure. ω1 and ω2 may be written as:

$$\omega 1 = \omega 0 + \Delta\omega$$

$$\omega 2 = \omega 0 - \Delta\omega$$

wherein ω0 is a constant. ω0 is the base common angular frequency for the control. ω0 may be close to the resonation frequency of the mirror axis. The resonation frequency may be set by the mechanical properties of the structure, or it may be tuned by external means such as electrostatic bias, temperature control, etc. Δω is the frequency difference for the control. The scanning pattern in the x'y'-plane depends on the frequency difference, as explained in more detail below.

Both the linear and rotational motions may be sinusoidal oscillations. Any sinusoidal functions which are used to generate linear motion may also be used to generate rotational motion, and any sinusoidal functions which are used to generate rotational motion may also be used to generate linear motion.

The first set of electrical signals may comprise a first electrical signal which is applied to the first set of actuators and a second electrical signal which is applied to the second set of actuators. The second set of electrical signals may comprise a third electrical signal which is applied to the first set of actuators and a fourth electrical signal which is applied to the second set of actuators.

The movement of the mirror, and thereby the scanning pattern, may be controlled via the angular frequency of the first electrical signal, the second electrical signal, the third electrical signal, and the fourth electrical signal.

In an implementation form, the first electrical signal, the second electrical signal, the third electrical signal and the fourth electrical signal may be cosine functions. The phasors of the electrical signals may be written as:

| | |
|---|---|
| First electrical signal | $+\cos(\omega 1\, t + \theta)$ |
| Second electrical signal | $+\cos(\omega 1\, t + \theta')$ |
| Third electrical signal | $+\cos(\omega 2\, t + \varphi)$ |
| Fourth electrical signal | $+\cos(\omega 2\, t + \varphi')$ |

Where θ, θ', φ and φ' are the phases of the first electrical signal, the second electrical signal, the third electrical signal and the fourth electrical signal, respectively.

Alternatively, either the first electrical signal is a cosine function, and the third electrical signal is a sine function, or the first electrical signal is a sine function, and the third electrical signal is a cosine function, and either the second electrical signal is a cosine function, and the fourth electrical signal is a sine function, or the second electrical signal is a sine function, and the fourth electrical signal is a cosine function. The phasors of the electrical signals may be written as the following examples:

| | |
|---|---|
| First electrical signal | $+\sin(\omega 1\, t + \theta)$ |
| Second electrical signal | $-\sin(\omega 1\, t + \theta')$ |
| Third electrical signal | $+\cos(\omega 2\, t + \varphi)$ |
| fourth electrical signal | $+\cos(\omega 2\, t + \varphi')$ |

or,

| | |
|---|---|
| First electrical signal | $+\cos(\omega 1\, t + \theta)$ |
| Second electrical signal | $-\sin(\omega 1\, t + \theta')$ |
| Third electrical signal | $-\sin(\omega 2\, t + \varphi)$ |

(continued)

| | |
|---|---|
| Fourth electrical signal | $+cos(\omega 2\, t + \varphi')$ |

Where θ, θ', φ and φ' are the phases of the first electrical signal, the second electrical signal, the third electrical signal and the fourth electrical signal, respectively.

There may be a first phase difference between the first electrical signal and the third electrical signal ($\theta - \varphi \neq 0$), and there may be a second phase difference between the second electrical signal and the fourth electrical signal ($\theta' - \varphi' \neq 0$). The first phase difference and the second phase difference may be dynamically controlled. The first phase difference may be equal to the second phase difference.

The phase of the first electrical signal may be equal to the phase of the second electrical signal and the phase of the third electrical signal may be equal to the phase of the fourth electrical signal. In other words, θ may be equal to θ' and φ may be equal to φ'. Alternatively, there may be a phase difference between the first electrical signal and the second electrical signal ($\theta - \theta' \neq 0$) and/or there may be a phase difference between the third electrical signal and the fourth electrical signal ($\varphi - \varphi' \neq 0$). The phase difference between the first electrical signal and the second electrical signal and the phase difference between the third electrical signal and the fourth electrical signal may be dynamically controlled. These options may apply to any embodiment in this disclosure.

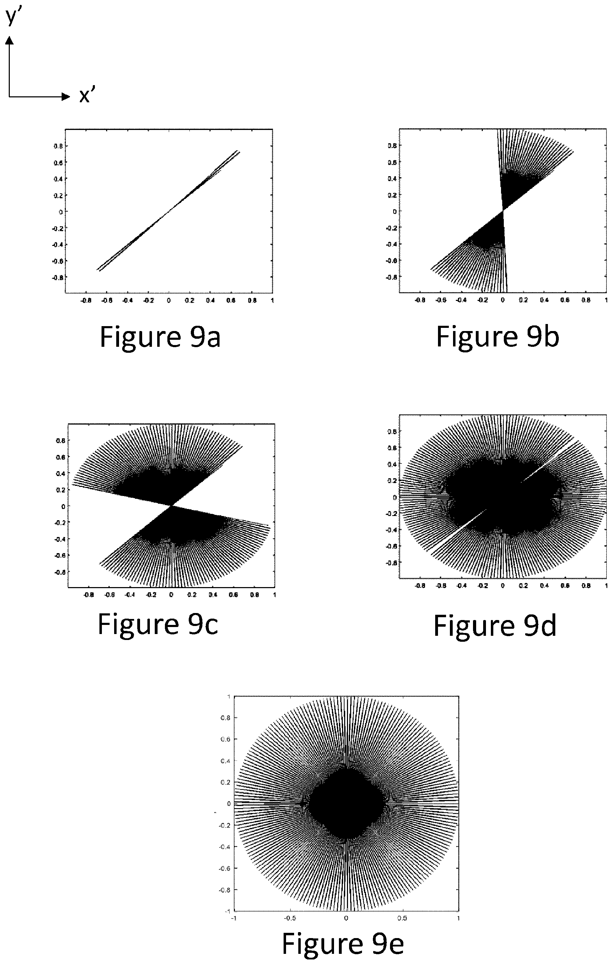

In an implementation form, Δω may be constant. In other words, there may be a static difference between the angular frequencies of the first set of electrical signals and the second set of electrical signals. Figures 9a-e illustrate depictions of consecutively recorded scanned areas in the x'y'-plane with the one or more sources of electrical signals configured to generate and apply the first set of electrical signals and the second set of electrical signals simultaneously to the first set of actuators and the second set of actuators. The phasors of the electrical signals are written as follows:

| | |
|---|---|
| First electrical signal | $+cos(\omega 1\, t)$ |
| Second electrical signal | $-sin(\omega 1\, t)$ |
| Third electrical signal | $-sin\,(\omega 2\, t)$ |
| Fourth electrical signal | $+cos(\omega 2\, t)$ |

In this example, $\theta = \theta' = 0$, $\varphi = \varphi' = 0$. Additionally, Δω is constant creating thereby a static difference between the angular frequencies of the first set of electrical signals ω1 and the angular frequencies ω2 of the second set of electrical signals. These electrical signals cause a centric sweep motion of the mirror with the center part of the scanned area being scanned multiple times.

Figure 9e shows the pattern created by a full scan of the area. The scanning pattern has a circular shape with a larger density of scanning points around the center compared to the edges of the pattern. The large density of scanning points is reflected by the dark color in the center of the image.

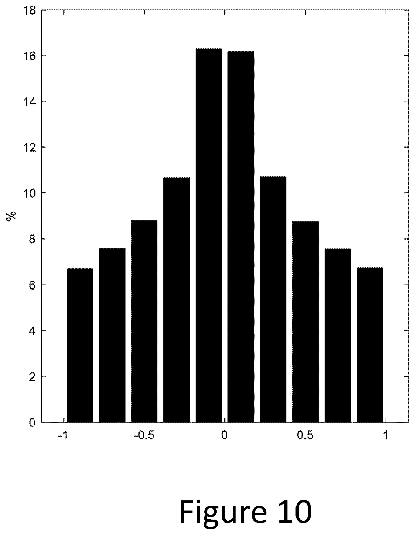

Figure 10 shows the distribution of the scanned points along the x'-axis in the scanning mode depicted in figure 9e. More than 50% of the measurement points are collected from the center part of the scanning pattern due to the repeated scans in that area. Such distribution results in high pixel accuracy in the center part of an image.

Δω may be time-dependent. In other words, the angular frequencies ω1 and ω2 may change during the scanning process so that there is a dynamic difference between the angular frequencies of the first set of electrical signals and the second set of electrical signals. For example, Δω may follow a sinusoidal function.

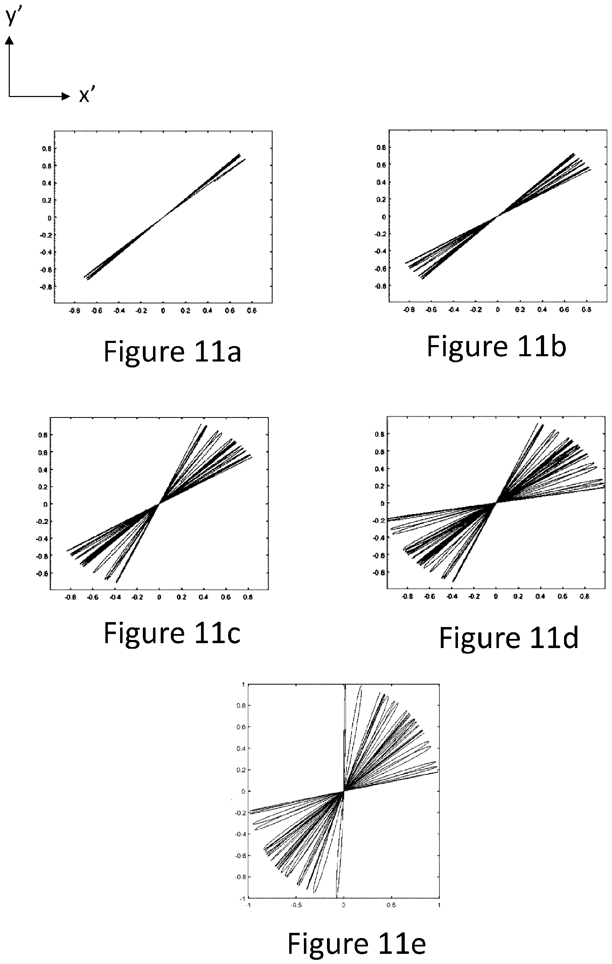

Figures 11a-e illustrate an example of depictions of consecutively scanned areas with the one or more sources of electrical signals configured to send simultaneously a first set of electrical signals to the first set and second set of actuators and a second set of electrical signals to the first set and second set of actuators. In this example, the phasors of the electrical signals are written as follows:

| | |
|---|---|
| First electrical signal | $+cos(\omega 1(t)\, t)$ |
| Second electrical signal | $-sin(\omega 1(t)\, t)$ |
| Third electrical signal | $-sin\,(\omega 2(t)\, t)$ |
| Fourth electrical signal | $+cos(\omega 2(t)\, t)$ |

The momentary frequencies may be written as

$$\omega 1(t) = \omega 1 + A \sin\left(\omega_{fm} t\right)$$

$$\omega 2(t) = \omega 2 - A \sin\left(\omega_{fm} t\right)$$

where modulation factor A may be used to set the speed and direction of the lateral sweeping motion, and the frequency $\omega_{fm}$ can be used to set the swept angle.

In this example, Δω is a sine function. The change of angular frequencies during the scanning mode creates a back-and-forth lateral motion in the x'y'-plane around the diagonal of the scanned area.

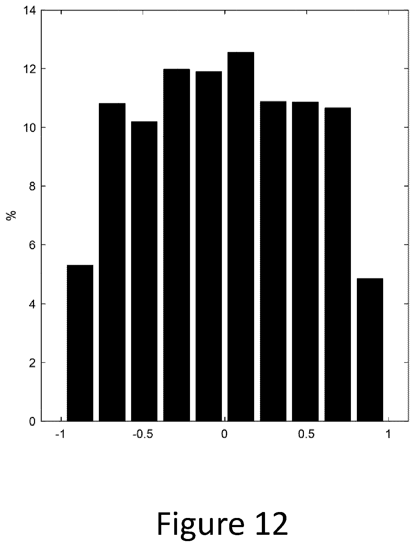

Figure 12 shows the distribution of the scanned points along the x'-axis in the scanning mode depicted in figure 11e. This scanning mode leads to a rather homogeneous distribution of the measurement points around the scanned area with the lowest number of measurement points being collected Near the edges of the scanned area. Such distribution results in high pixel accuracy in the center part of an image.

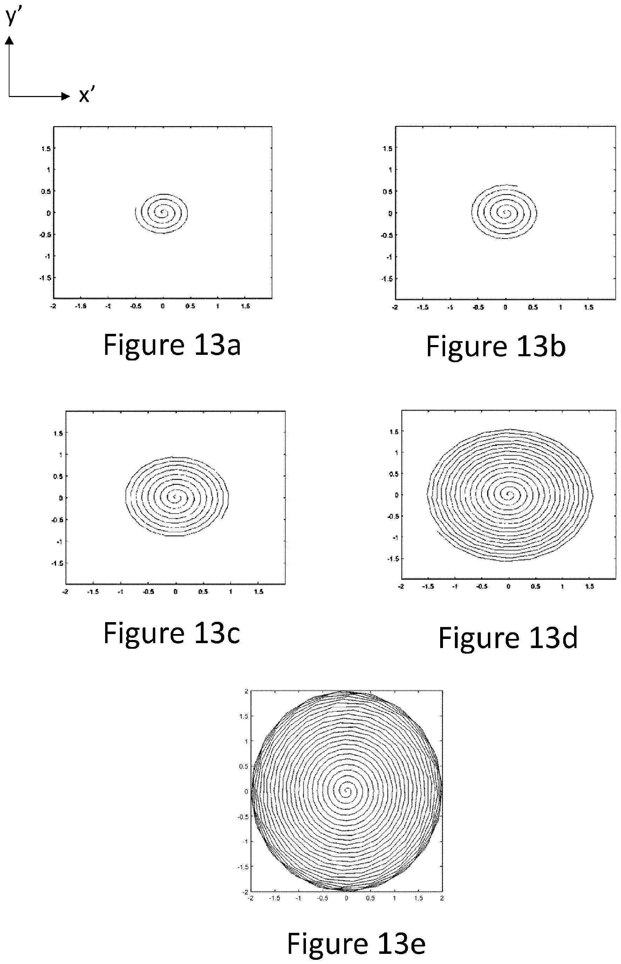

Figures 13a-e illustrate another example of depictions of consecutively scanned areas with the one or more sources of electrical signals configured to send simultaneously a first set of electrical signals to the first set and second set of actuators and a second set of electrical signals to the first set and second set of actuators. In this scanning mode, $\Delta\omega$ varies versus time by following a sinusoidal function. The phasors of the electrical signals may be written as

| First electrical signal | $+\cos(\omega1(t)\,t)$ |
|---|---|
| Second electrical signal | $-\sin(\omega1(t)t)$ |
| Third electrical signal | $-\cos(\omega2(t)\,t)$ |
| Fourth electrical signal | $+\sin(\omega2(t)t)$ |

Or as:

| First electrical signal | $+\cos(\omega1(t)t)$ |
|---|---|
| Second electrical signal | $-\sin(\omega1(t)t)$ |
| Third electrical signal | $-\sin(\omega2(t)t + \varphi)$ |
| Fourth electrical signal | $-\cos(\omega2(t)t + \varphi')$ |

Wherein the phase $\varphi=\varphi'=90°$.

The momentary frequencies may be written as

$$\omega1(t) = \omega1 - A \sin(\omega_{fm}t)$$

$$\omega2(t) = \omega2 + A \sin(\omega_{fm}t)$$

wherein $\omega1 > \omega2$.

The change of angular frequencies during the scanning mode creates a spiral motion in the x'y'-plane. The beam path starts slowly from the center, spirals accelerating to the outer edge, then returns decelerating following a similar path back to the center. Modulation factor A may be used to set the direction of the spiralling motion and the spiral speed. The frequency $\omega_{fm}$ may be used to set the frequency of the spiralling motion from center to outer edge and back to the center.

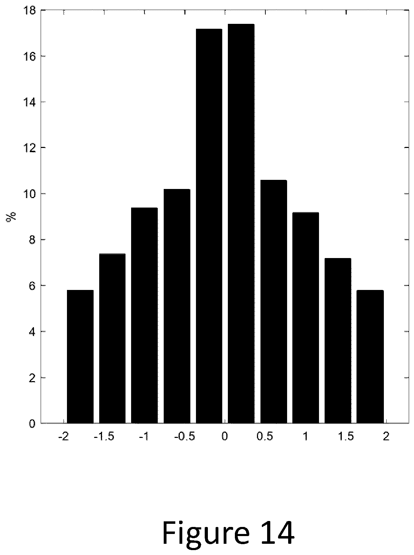

Figure 14 shows the distribution of the scanned points along the x'-axis in the scanning mode depicted in figure 11e. This scanning mode leads to a rather homogeneous distribution of the measurement points around the scanned area with the lowest number of measurement points being collected Near the edges of the scanned area. Such distribution results in high pixel accuracy in the center part of an image.

**Claims**

1. An arrangement comprising:

   - a fixed structure, wherein the fixed structure defines a horizontal xy-plane, and there is vertical z-direction which is perpendicular to the xy-plane,
   - a mirror, wherein the mirror is attached to the fixed structure via a suspension structure and the mirror has a zero-position, and wherein the mirror is configured to reflect an incoming light beam,
   - a first set of actuators connected to the mirror and a second set of actuators connected to the mirror, wherein the first set of actuators and the second set of actuators are configured to move the mirror in relation to the xy-plane,
   - one or more sources of electrical signals, wherein the one or more sources of electrical signals are configured to apply a first set of electrical signals to the first set and second set of actuators, and the one or more sources of electrical signals are also configured to apply a second set of electrical signals to the first set and second set of actuators,
   and wherein a reflected light beam points in the direction of a first axis when the mirror is in its zero-position,
   **characterized in that**
   the first set of electrical signals is configured to move the mirror so that the reflected beam obtains a nonzero angle with the first axis and rotates about the first axis in a first direction when the first set of electrical signals is applied to the first set and second set of actuators, and the second set of electrical signals is configured to move the mirror so that the reflected beam obtains a nonzero angle with the first axis and rotates about the first axis in a second direction when the second set of electrical signals is applied to the first set and second set of actuators, wherein the second direction is opposite to the first direction,

2. An arrangement according to claim 1, wherein the first set of actuators is configured to move the mirror by rotational oscillation about the x-axis, and the second set of actuators is configured to move the mirror by rotational oscillation about the y-axis.

3. An arrangement according to claim 2, where the mirror is flat.

4. An arrangement according to claim 2, where the mirror is convex or concave.

5. An arrangement according to claim 1, wherein the mirror has a curved surface, and wherein the first set of actuators is configured to move the mirror by linear oscillation along the x-axis, and the second set of actuators is configured to move the mirror by linear oscillation along the y-axis.

6. An arrangement according to any of claims 1-5, wherein the first set of electrical signals and the second set of electrical signals are sinusoidal wave electrical signals, and the signals in the first set of electrical signals have an angular frequency $\omega 1$, and the signals in the second set of electrical signals have an angular frequency $\omega 2$.

7. An arrangement according to claim 6, wherein $\omega 1 = \omega 0 + \Delta\omega$ and $\omega 2 = \omega 0 - \Delta\omega$, wherein $\omega 0$ is a constant.

8. An arrangement according to claim 7, wherein $\Delta\omega$ is constant.

9. An arrangement according to claim 7, wherein $\Delta\omega$ is time-dependent.

10. An arrangement according to claim 9, wherein $\Delta\omega$ follows a sinusoidal function.

11. An arrangement according to any of claims 1-10, wherein the first set of electrical signals comprises a first electrical signal which is applied to the first set of actuators and a second electrical signal which is applied to the second set of actuators, and the second set of electrical signals comprises a third electrical signal which is applied to the first set of actuators and a fourth electrical signal which is applied to the second set of actuators.

12. An arrangement according to claim 11, wherein the first electrical signal, the second electrical signal, the third electrical signal and the fourth electrical signal are cosine functions.

13. An arrangement according to claim 11, wherein either

   - the first electrical signal is a cosine function, and the third electrical signal is a sine function, or
   - the first electrical signal is a sine function, and the third electrical signal is a cosine function,

   and either

   - the second electrical signal is a cosine function, and the fourth electrical signal is a sine function, or
   - the second electrical signal is a sine function, and the fourth electrical signal is a cosine function.

14. An arrangement according to any of claims 11-13, wherein there is a phase difference between the first electrical signal and the second electrical signal.

15. An arrangement according to any of claims 11-14, wherein there is a phase difference between the third electrical signal and the fourth electrical signal.

Figure 1a

Figure 1b

Figure 2a

Figure 2b

Figure 3a

Figure 3b

Figure 3c

z

y

Figure 3d

Figure 3e

Figure 4a

Figure 4b

Figure 4c

z

y

411    412

401

Figure 4d

411
412

401

Figure 4e

Figure 5

Figure 6a

Figure 6b

Figure 6c

Figure 6d

Z

X

709

7018
7020
701
708
702
7019

Figure 7a

7120
7019
709
7018
7020
701
701
702
708

Figure 7b

7018
7020
7220
701
702
7019
709
701
708

Figure 7c

Figure 8a

Figure 8b

Figure 8c

Figure 9a

Figure 9b

Figure 9c

Figure 9d

Figure 9e

Figure 10

Figure 11a

Figure 11b

Figure 11c

Figure 11d

Figure 11e

Figure 12

Figure 13a

Figure 13b

Figure 13c

Figure 13d

Figure 13e

Figure 14

Europäisches
Patentamt

European
Patent Office

Office européen
des brevets

# EUROPEAN SEARCH REPORT

**Application Number**

EP 24 16 2901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/064508 A1 (TORKKELI ALTTI [FI] ET AL) 28 February 2019 (2019-02-28) | 1-3,6, 11-15 | INV. G02B26/10 |
| A | * figure 5 *<br>* paragraph [0105] - paragraph [0106] * | 5,7-10 | |
| | ----- | | |
| X | US 2005/253055 A1 (SPRAGUE RANDALL B [US] ET AL) 17 November 2005 (2005-11-17) | 1-4,6, 11-15 | |
| A | * figure 5 *<br>* paragraph [0034] * | 5,7-10 | |
| | ----- | | |
| X | US 2023/341523 A1 (GAO YONGFENG [CN] ET AL) 26 October 2023 (2023-10-26) | 1-3,11 | |
| A | * figure 2 *<br>* paragraph [0034] * | 5,7-10 | |
| | ----- | | |

**TECHNICAL FIELDS SEARCHED (IPC)**

G02B

The present search report has been drawn up for all claims

| Place of search | Date of completion of the search | Examiner |
|---|---|---|
| Munich | 19 August 2024 | Orignac, Xavier |

EPO FORM 1503 03.82 (P04C01)

**ANNEX TO THE EUROPEAN SEARCH REPORT
ON EUROPEAN PATENT APPLICATION NO.**

EP 24 16 2901

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2024

| Patent document cited in search report | Publication date | Patent family member(s) | | Publication date |
|---|---|---|---|---|
| US 2019064508 A1 | 28-02-2019 | CN | 109425981 A | 05-03-2019 |
| | | EP | 3447560 A1 | 27-02-2019 |
| | | JP | 6733709 B2 | 05-08-2020 |
| | | JP | 2019061221 A | 18-04-2019 |
| | | US | 2019064508 A1 | 28-02-2019 |
| US 2005253055 A1 | 17-11-2005 | US | 2005253055 A1 | 17-11-2005 |
| | | US | 2008042052 A1 | 21-02-2008 |
| | | US | 2008143196 A1 | 19-06-2008 |
| | | US | 2008143451 A1 | 19-06-2008 |
| | | US | 2009027748 A1 | 29-01-2009 |
| | | US | 2009134319 A1 | 28-05-2009 |
| US 2023341523 A1 | 26-10-2023 | CN | 113924510 A | 11-01-2022 |
| | | US | 10571552 B1 | 25-02-2020 |
| | | US | 2020355803 A1 | 12-11-2020 |
| | | US | 2023341523 A1 | 26-10-2023 |
| | | WO | 2020223877 A1 | 12-11-2020 |

EPO FORM P0459

For more details about this annex : see Official Journal of the European Patent Office, No. 12/82